# EUROPEAN PATENT APPLICATION

(11) **EP 4 796 720 A1**
(43) Date of publication of application: **26.08.2026**
(21) Application number: 24879203.8
(22) Date of filing: 08.10.2024
(51) Int. Cl.: E03D 5/00, E03C 1/14

(54) **WATER ECONOMISER FOR BATHROOMS**

(30) Priority: 16.10.2023 ES 202331843 U
(71) Applicant: Bartolomé Gómez, Miguel Ángel, 08041 Barcelona (ES)
(72) Inventor: Bartolomé Gómez, Miguel Ángel, 08041 Barcelona (ES)
(74) Representative: Espiell Gomez, Ignacio
(86) International application number: PCT/ES2024/070611
(87) International publication number: WO 2025/083306

(57) **Abstract**

The present invention relates to a water economiser for bathrooms that, as a single unit or having independent modules (A,B), comprises a greywater tank (2), which receives the used water from the sink, and a treated water tank (6); filter elements (5) in the tank (2) and/or between both tanks (2, 6), arranged so that water passes from one to the other and through the filter elements (5); a drive pump (11) in a treated water conduit (13) connected to the tank (6) to carry it to a conduit of the toilet cistern (15); a three-way solenoid valve (12) connected between the treated water conduit (13), the conduit of the cistern (15), and a conduit to the network (14); a level sensor (8) of the treated water tank (6) that activates/deactivates the solenoid valve (12); and an electrical panel (10) for controlling the electrical components of the economiser.

## Description

### OBJECT OF THE INVENTION

As expressed in the title of the present specification, the invention relates to a water economiser for bathrooms, providing advantages and features that are described in detail below.

The object of the present invention relates to an economiser which, based essentially on a circuit with a greywater collection tank, a series of filter and treatment elements, and a treated water tank, has the purpose of recovering water disposed of in the sink basin and introducing it, by means of electromechanical assistance, in the toilet cistern, providing a system for saving and economising water, by preventing the disposal of the water used in the sink while at the same time reducing the consumption of clean water for the toilet. The greywater and treated water tanks are installed either as a single unit in one and the same receptacle, or as two independent modules, one module with the greywater tank directly coupled to the sink drain conduit, and another separate module with the treated water tank placed wherever is most convenient.

### FIELD OF APPLICATION OF THE INVENTION

The field of application of the present invention is comprised within the sector of the industry dedicated to the manufacture of domestic water installations, focusing particularly on the field of systems for saving water.

### BACKGROUND OF THE INVENTION

As well known, water scarcity is an environmental problem that must increasingly be taken into account in every aspect of modern life, so it is necessary to seek ways to save water, particularly in the field of industrial development, preventing or minimising wasting unnecessary water wastage.

Based on said premise, and taking into account that the water used in the sink basin, which is generally only used for washing hands, face, and teeth, but little else, so said water does not usually get very dirty, and that, on the other hand, the water used for the toilet, collected from the cistern, does not have to be potable and perfectly clean and clear like water from the network supply, the present invention proposes the development of an economiser that, taking advantage of the fact that the sink basin and the toilet are the two sanitary elements that are usually included in almost every bathroom in any home or public or private building, allows saving water by using the water used in the sink to fill the toilet cistern and utilising it a second time before it is lost down the drain, allowing water consumption cost to be reduced at the same time.

Moreover, and in reference to the current state of the art, it should be indicated that, although other systems for saving water are known, at least the applicant itself is unaware of the existence of any other economiser for bathrooms or any other invention of similar application having technical, structural, and constitutive features identical or similar to those claimed herein.

### DESCRIPTION OF THE INVENTION

The water economiser for bathrooms proposed by the invention is configured as an optional solution to the aforementioned objectives, with the characterising details that make it possible and distinguish it being conveniently included in the final claims accompanying the present description.

Specifically, as set forth above, the invention proposes an economiser which, applicable for the installation thereof connected to the sink basin of a bathroom, connected to the drain thereof, and to the toilet cistern, has the function of recovering water disposed of in the sink basin and introducing it, by means of electromechanical assistance, in the toilet cistern, providing a system for saving and economising water by preventing the disposal of the water used in the sink while at the same time reducing the consumption of clean water for the toilet. Furthermore, in one embodiment option, the greywater and treated water tanks can be installed as a single unit, or in an alternative and preferred embodiment option, as two independent modules, where a first module, with the greywater tank, is installed directly coupled to a segment of the sink drain conduit, while a second module, with the treated water tank and other elements of the economiser, is installed placed at any point of the bathroom wherever is most convenient.

**In** any case, it should be mentioned that the economiser is designed so that, in the case of not having sufficient treated water, it will still be capable of ensuring water supply for the toilet cistern through the network water supply.

Therefore, the particularity of the economiser is that it allows taking advantage of the water usage point in the sink for use thereof as a support point if needed.

**The** water recovered by the economiser is filtered and treated therein so as not to clog the mechanisms inside the toilet cistern and alter the microbial load thereof.

As indicated above, the economiser is installed connected to the drain conduit in the sink basin and provided with means to collect greywater from same and to decant said water in a first phase in a first accumulator tank, causing heavier solids to remain in the lower part of said tank.

Furthermore, in said tank or between the first tank and a second accumulator tank, the economiser comprises at least one filter element capable of retaining particles suspended in the water so as to prevent their passage to said second accumulator tank.

**In** turn, the economiser comprises in said second accumulator tank, or before or after same, at least one chemical or microbiological treatment element based on a chlorinated or antibacterial material and/or on ultraviolet light to prevent the reproduction of colonies of microorganisms.

The treated water accumulated in the second accumulator tank is pumped by means of a pressure unit to the toilet cistern. To that end, the pressure unit comprises at least one pressure pump and an electronic pressure switch which activates or deactivates the pump depending on the drive pressure, and at least one level sensor which allows the pump to work or to stop in relation to the level of accumulated treated water.

Furthermore, preferably, the actual mechanical float of the toilet cistern works as a valve, i.e., as soon as the float opens, the electronic pressure unit detects a lack of pressure in the line and activates the pump to ensure water supply to the cistern. When the mechanical float of the toilet cistern closes because the cistern is full of water, the electronic pressure switch stops the pump when it reaches the setpoint pressure.

The economiser is capable of supplying water pressure to the drive line in a constant manner. To that end, it comprises a three-way valve which allows ensuring the necessary pressure.

Said three-way valve collects the drive line of the pumping unit of the treated water accumulator tank and water from the network supply, preferably from the water intake of the sink itself. In the event that the level sensor detects a lack of water, it will deactivate the pumping unit and activate the solenoid of the three-way valve, causing a state change thereof to allow water from the network (water intake from the sink tap) to ensure water supply to the toilet cistern. Once the electronic pressure switch detects a water flow, it will activate the solenoid of the three-way valve again so that it changes its state and so that water is pumped with the pressure unit.

Preferably, the greywater accumulation and decantation tank has an overflow in its upper part so that, in the event that water treatment collapses, the decantation accumulator dumps the water to the main drain through said overflow.

In any case, as discussed above, in one embodiment option, both tanks are installed as a single unit forming a single receptacle or a compact element which is connected at one end to the sink drain conduit and at the other end to the conduit of the cistern and the network intake.

However, in an alternative and preferred embodiment, the economiser is modular and comprises two independent modules, one module with the first tank or greywater-containing tank, which is installed coupled to a segment of the sink drain conduit, under the sink basin, and another independent module, with the second tank or treated water tank, which can be installed at another point of the bathroom wherever is most convenient.

More specifically, in this second embodiment option, the mentioned modules are envisaged for easy installation and prepared to be connected to one another, intercalating the first greywater collection module in the sink drain and being able to adapt the second treated water accumulation and distribution module in any location, although it is not recommended to install it in the bathtub to avoid proximity to the electrical current in the shower space.

Furthermore, this first module will be capable of separating solids contained in the water disposed of through the sink and delivering filtered water to the second module by means of a set of internal compartments which are part of the first module, of several connections, and one or several filter elements. It will also be capable of automatically delivering excess water down the general drain and prevent odours from coming through the conduits of the sink by maintaining an amount of water in its accumulation compartments at all times to prevent odours from rising.

In turn, the second module, by means of a system with water detection means or level sensors, a pressure switch, a small pump, in this case a drive pump, a small ultraviolet lamp, a three-way solenoid valve, a check valve, and a small accumulation tank, will accumulate, disinfect, and deliver the accumulated water to the toilet cistern. The ultraviolet lamp will be responsible for eliminating possible microorganisms from the water filtered by the first module and a three-way solenoid valve will be responsible for ensuring that the toilet cistern is constantly supplied with water filtered by the first module of the present invention or through the network water supply.

Water coming from the sink which the first module will be capable of collecting will be directed to the accumulator tank of the second module. Once the desired level is reached, the level sensor located in the upper part of the accumulation tank will activate the signal of the three-way solenoid valve which will in turn cause the state change thereof and interrupts the passage of the network water (coming from the cold water point of the sink tap), delivering treated water recovered from the device. The pressure switch will be responsible for controlling the pump depending on the set pressure. Similarly, the pressure switch of the pump will control the ultraviolet lamp.

When the need arises to flush the toilet, pressure in the line will decrease and the pressure switch will be responsible for detecting this need to start the pump and the ultraviolet lamp, ensuring a constant water supply until the desired pressure is reached once the toilet cistern closes the water passage.

The level sensor located in the lower part of the accumulation tank of the second module of the present invention will deactivate the signal of the three-way solenoid valve and accordingly stop the drive pump and the ultraviolet lamp to allow the passage of network water from the cold water intake of the sink, ensuring a constant water supply to the toilet cistern. Electrical energy is thus optimised.

By means of a check valve arranged in the filtered water line, the water flow coming from the cold water network is directed to the toilet, preventing this water from entering the accumulation tank and accordingly from being disposed of down the drain.

Accordingly, the economiser is capable of ensuring the delivery of network water or recovered treated water depending on the level of accumulated water.

Additionally, the inclusion of an indicator has been envisaged to warn the user of the status of the system. Alternatively, an audible or light notification device can be used.

### DESCRIPTION OF THE DRAWINGS

To complete the description provided herein, and for the purpose of helping to make the features of the invention more readily understandable, this description is accompanied by a set of drawings constituting an integral part of the same, which by way of illustration and not limitation represents the following:
Figure 1 shows an elevational schematic depiction of a first embodiment of the water economiser for bathrooms object of the invention, specifically an example of the variant thereof configured as a single compact unit, where the main parts and elements that it comprises can be seen; and
Figures 2-A and 2-B shows respective schematic views of the respective two independent modules comprised in the economiser object of the invention in an alternative variant thereof, where the parts and elements that each of said modules comprises can be seen.

### PREFERRED EMBODIMENT OF THE INVENTION

In view of the mentioned figures and according to the numbering used, non-limiting embodiments of the water economiser for bathrooms of the invention, which comprises what is described in detail below, can be seen therein.

In that sense, as seen in said figures, the economiser of the invention essentially comprises the following elements:
- one or more receptacles comprising at least two independent water accumulation tanks formed by:
   - a first greywater accumulation tank (2) which receives, through a greywater inlet conduit (1), the used water from the sink basin drain (1.3), allowing the accumulation of water disposed of through said sink drain, and
   - a second treated water accumulation tank (6);
- one or several filter elements (5) installed either in the first tank (2) or between the first and second tanks (2, 6), said tanks (2, 6) being arranged such that flows which allow water to pass from one to the other and through the mentioned filter elements (5) are generated;
- a pressure or drive pump (11) which, installed in a line of the treated water conduit (13) connected to the lower part of the treated water accumulation tank (6), is responsible for transferring treated water in the economiser and introducing it in the toilet cistern (not depicted) through a conduit line to the cistern (15);
- a three-way solenoid valve (12) connected between the line of the treated water conduit (13), the conduit line to the cistern (15), and a conduit line to the supply network (14), such that, under normal conditions, i.e., when the treated water accumulation tank (6) has enough water, it collects water supplied thereto by the drive pump (11) from said treated tank (6) and delivers the water to the toilet cistern, and, in the case where the treated water accumulation tank (6) runs out of water, changes its state and delivers water to the cistern from the line of the network (14), thereby allowing a constant water supply to the toilet cistern;
- at least one level sensor (8) associated with the treated water accumulation tank (6) and which, depending on the water level in said tank (6), activates or deactivates the position of the solenoid valve (12) such that water supply to the toilet cistern is ensured; and
- an electrical control panel (10) for the control, safety, and automatisation of the different electrical components of the economiser.

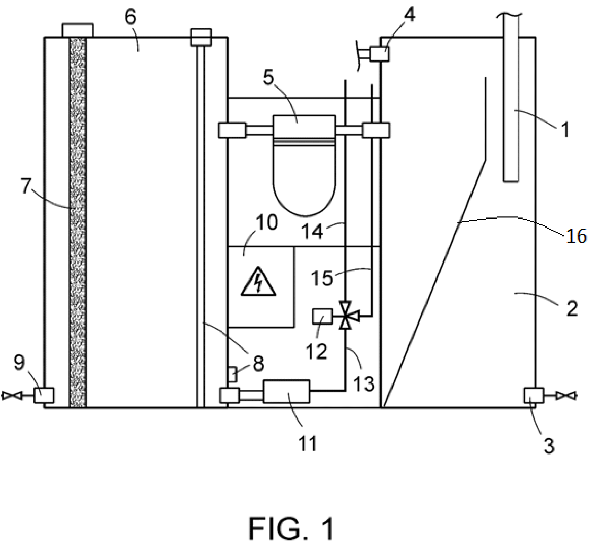

Therefore, in a first embodiment option of the economiser of the invention, schematically depicted in Figure 1, the greywater accumulation tank (2) and the treated water accumulation tank (6) are incorporated in one and the same single module or block envisaged for the joint installation thereof, preferably under the sink, in which case, the filter elements (5) are installed between the first and second tanks (2, 6), and to that end said tanks (2, 6) are arranged such that flows are generated therein allowing water to pass from the first greywater tank (2) to the second treated water tank (6) through openings by means of conduits in which one or several filter supports with the mentioned filter elements (5) are installed to enable performing greywater treatment, defining a system of communicating vessels.

Preferably, the pressure or drive pump (11) comprises an electronic pressure switch the purpose of which is to ensure a continuous pressure when there is a demand from the toilet cistern, such that, if needed, it activates the signal of the pump (11) and, once the setpoint pressure is reached, orders the pump to stop.

Preferably, the level sensor (8) of the treated water accumulation tank (6) is an electromagnetic sensor.

Preferably, the first greywater accumulation tank (2) comprises therein separation means (16) for separating solids by decantation, such that the water passing to the second treated water accumulation tank (6) is water that is free of waste material.

Preferably, the filter elements (5) provided between the greywater accumulation tank (2) and the treated water tank (6) comprise a filter or filters capable of separating larger particles in the wastewater or greywater before dumping it into the treated water tank (6).

Preferably, said filter is of the "self-cleaning" type, facilitating and prolonging the service life of the filter element (5).

Furthermore, in a preferred embodiment of the economiser, it comprises a chemical or microbiological treatment element (7) based on a chlorinated or antibacterial material to enable reducing the organic matter in the wastewater and preventing the reproduction of colonies of microorganisms. Preferably, said antibacterial microbiological treatment element (7) is incorporated inside the treated water accumulation tank (6).

Finally, both tanks (2, 6) preferably have different emptying points, either as a safety measure or to perform maintenance works.

Specifically, the greywater accumulation tank (2) preferably comprises at least one waste emptying point (3) in its lower part to enable periodically dumping accumulated waste out of the tank or to perform auxiliary waste accumulation tank expansion, and preferably a safety outlet point (4) in its upper part, acting as an overflow to allow discharging greywater in the case of collapse.

Furthermore, the treated water accumulation tank (6) preferably comprises at least one treated water emptying point (9) to perform maintenance works or to perform auxiliary accumulation tank expansion.

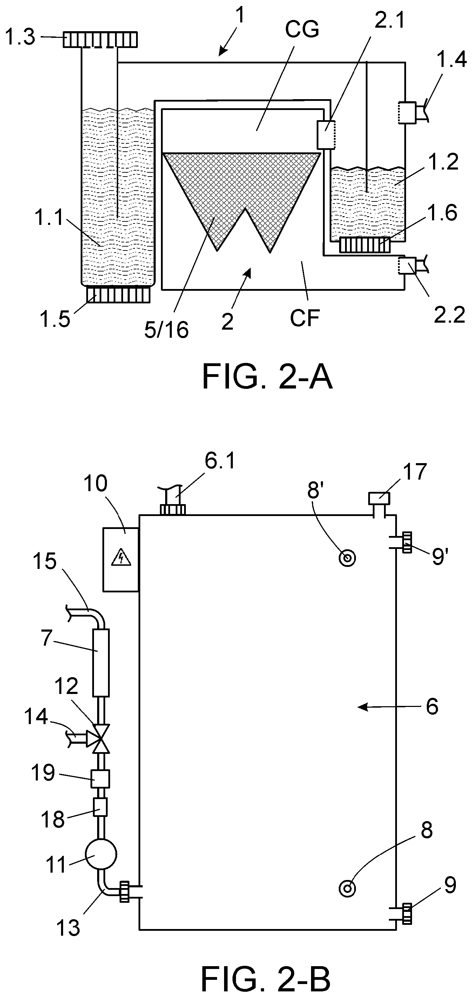

Moreover, considering Figures 2-A, 2-B, it can be seen how, in an alternative embodiment option, the greywater accumulation tank (2) and the treated water accumulation tank (6) are incorporated in respective independent modules (A, B) and with a first module (A) with the first tank (2) being envisaged to be installed under the sink basin, between the sink basin drain (1.3) and the general drain (1.4) provided in the sink, and a second module (B) with the second tank (6) being envisaged to be installed in a different place, connected to the conduit line to the toilet cistern (15), both tanks (2, 6) being connected to one another by means of an intermediate conduit.

To that end, the first module (A) preferably comprises:
- a main segment of the greywater inlet conduit (1), with a specifically designed configuration defining two decantation spaces or siphons (1.1 and 1.2), which is connected to the sink basin drain (1.3) and to the general drain (1.4), having two emptying points (1.5, 1.6); and
- a greywater accumulation tank (2) which, in this case, contains therein a filter element (5) for separating solids from water and furthermore has an inlet opening (2.1) for the entry of water from the greywater inlet conduit (1) and an outlet opening (2.2) for the exit of filtered water to the intermediate conduit connecting with the tank (6) of module (B), as well as anchoring means for securing to said main segment of the greywater inlet conduit (1), preferably by means of readily detachable anchors that allow the replacement thereof.

In turn, the second module (B) comprises:
- a treated water accumulation tank (6), provided with an inlet opening (6.1) communicating with the intermediate conduit connecting with the outlet opening (2.2) of the tank (2) of the first module (A);
- a pump (11), in this case a drive pump, for transferring water accumulated in the tank (6) to the conduit of the toilet (15);
- a pressure switch (18) arranged in the filtered water feed segment (13), upstream of the drive pump (11);
- a three-way solenoid valve (12) that allows either passage through the filtered water conduit (13) or through the water conduit of the network (14) to the conduit of the toilet (15);
- chemical or microbiological treatment elements (7);
- at least one level sensor (8) in the tank (6);
- an electrical control panel (10).

Preferably, the second module (B) has, as chemical or microbiological treatment elements (7), an ultraviolet lamp encased in a receptacle arranged to that end through which water passes, said lamp being arranged in the conduit to the toilet (15), upstream of the three-way solenoid valve (12).

In any case, the economiser preferably comprises a lower level sensor (8) arranged in the lower part of the treated water accumulation tank (6) and an upper level sensor (8') arranged in the upper part of the treated water accumulation tank (6).

The treated water accumulation tank (6) preferably comprises an air vent (17) located in the upper part thereof.

The economiser preferably comprises a safety check valve (19) arranged in the filtered water conduit (13) downstream of the three-way solenoid valve (12) and upstream of the pump (11).

Furthermore, the economiser preferably comprises the inclusion of a notification device, for example a light or audible notification device, associated with the electrical control panel (10) and connected such that it provides notification when the economiser is operating through the line of the filtered water conduit (13).

Preferably, there is also envisaged the inclusion of a timer for limiting the operation time of the drive pump (11) and, optionally, another notification device, associated with the electrical control panel (10), connected such that it provides notification when the economiser when the line of the filtered water conduit (13) does not reach the desired pressure within a set time predetermined by the timer.

In any case, the treated water accumulation tank (6) comprises at least one emptying point (9) in the lower part, preferably comprises two openings made as a lower emptying point (9) and an upper emptying point (9') to enable coupling one or several accumulation tanks and expanding the capacity for accumulated water coming from the tank (2) and/or performing maintenance tasks.

More specifically, in the option shown in Figures 2-A, 2-B, the elements of the economiser are integrated as two independent modules (A, B). The module (A) can be installed at the outlet of the sink basin drain (1.3) and connected to the general sanitation network (1.4), having a completely neutral behaviour when evacuating greywater coming from the sink basin. Furthermore, the module (B) can be installed in any area of the bath, although it is not recommended to install it in the bathtub area to prevent proximity to the electrical current, since this second module can be connected to the electrical power supply network.

The module (B) is normally in a standby state, delivering water from the conduit of the network (14) to the conduit of the toilet (15) unless the level sensor (8') located in the upper part of the accumulation tank (6) detects the existence of a water level, at which time the three-way solenoid valve (12) is activated as a result of the action of the different components controlled and managed by the electrical control panel (10), allowing the treated water to pass through the conduit (13) to the conduit of the toilet (15) and closing the passage of water from the network (14). Once the level sensor (8) located in the lower part of the accumulation tank (6) detects the absence of a sufficient water level, it deactivates the coil of the solenoid valve (12) to allow water from the network (14) to pass to the conduit of the toilet (15).

Module A, including the aforementioned elements, will preferably be arranged between the outlets of the sink basin drain (1.3) intercalated between the general drain conduit of said basin (1.4).

There is contemplated in module A a segment of the greywater inlet conduit (1) with a particularly designed configuration comprising a first decantation chamber (1.1) which ensures the absence of odours coming from the economiser, as well as a second decantation chamber (1.2) which will ensure that odours coming from the general drain (1.4) do not enter the tank (2).

Between said decantation chambers (1.1, 1.2) of said segment of the conduit (1) of module A, there will be an opening (2.1) which will ensure the passage of water to the greywater accumulation tank (2).

There is contemplated in the lower part of the first decantation chamber (1.1) of the segment of the conduit (1) of module A a first emptying point (1.5) where it will have a threaded element for the emptying thereof; and there is contemplated in the lower part of the second decantation chamber (1.2) a second emptying point (1.6) with another threading element for the emptying thereof.

In turn, the tank (2) of module A will contain therein at least one filter element (5). This filter element (5) acts as a separator between the greywater chamber (CG) and the filtered water chamber (CF) and retains the solid particles contained in the greywater coming from the sink drain (1.3). Similarly, the tank (2) has an outlet opening (2.2) for the exit of filtered water, in the part slightly above said filtered water chamber (CF), which opening (2.2) is connected to an intermediate conduit (not depicted) which joins module A with module B. In any case, the greywater accumulation tank (2) is secured and coupled to the main segment of the greywater inlet conduit (1) by means of readily detachable anchors that allow the replacement thereof.

Module B, including the aforementioned elements, is preferably installed in an area close to module A.

The accumulation tank (6) of module B is connected through an inlet opening (6.1) in the upper part with the intermediate conduit which connects the opening (2.2) of the tank (2) of module A.

The three-way solenoid valve (12), arranged in module B, connected between the line of the filtered water conduit (13), the conduit line to the cistern (15), and the conduit line to the supply network (14) for supplying cold water coming from the intake of the sink tap, under normal conditions, keeps the economiser at standby to receive the signal from the upper level sensor (8') and the water demand to the toilet cistern is ensured by means of the cold water supply from the network (14). Once the electrical control panel (10) receives the signal from the upper level sensor (11), the three-way solenoid valve (12) changes its state, allowing the treated water to pass, thereby allowing a constant supply of water to the toilet cistern and with the advantage of saving water.

The three-way solenoid valve (12) is normally closed, allowing the passage of water from the network (14) coming from the usage point of the sink tap, such that, in case of power failure, coil failure, or disconnection of the device, module B will allow the passage of water from the network (14) to the conduit of the toilet cistern (15). Likewise, if module A is filled with water because module B has been completely filled with water, it will be capable of evacuating the water to the general sanitation network (1.4) if it is full through the opening arranged to that end.

There is contemplated in the accumulation tank (6) of module B the inclusion of two level sensors (8 and 8') arranged such that one sensor (8') will be arranged in the upper part of the accumulation tank (6) and the other sensor (8) in the lower part thereof. Depending on the water level of said tank (6), the three-way solenoid valve (12) is activated or deactivated such that water supply to the toilet cistern (15) is ensured at all times.

The openings (9, 9') made to expand the accumulation capacity of the tank (6) of module B will be arranged in the upper part and the lower part of the accumulation tank (6).

The air vent (17) is responsible for eliminating air from the accumulation tank (6) and will be arranged in the upper part of the accumulation tank (6) of module B.

The pressure switch (18) of module B is responsible for providing the electrical signal to activate or deactivate the drive pump (11) when it detects a pressure fluctuation in the conduit to the cistern (15), provided that the three-way solenoid valve (12) allows the passage of filtered water to said conduit of the cistern (15). Preferably, it will be arranged upstream of the pump (11) and downstream of the three-way solenoid valve (12).

The pump (11) of module B is responsible for delivering filtered water to the conduit of the cistern (15) when the three-way solenoid valve (12) is activated and allowing the passage of filtered water (13) accumulated in the tank (6) of module B. Preferably, said pump (11) is arranged downstream of the pressure switch (18).

The ultraviolet lamp (7) is responsible for eliminating possible microorganisms in the water filtered by module A and accumulated in module B. It will be arranged upstream of the three-way solenoid valve (12) and will be controlled by the pressure switch (18), so it will be activated at the same time as the drive pump (11).

The check valve (19) arranged in the filtered water conduit (13) has the function of preventing the water coming from the water point of the network (14) from entering the treated water accumulation tank (6) and therefore ending up in module A, with water being disposed of down the general drain (1.4). Preferably, it will be arranged downstream of the three-way solenoid valve (12), in the filtered water conduit (13).

Finally, it should be noted that, module B optionally has an audible or light "malfunction" notification device (not depicted), associated with the electrical control panel (10) such that, when the pressure of the filtered water line (13) does not reach the setpoint value within a set time, it disconnects the economiser and allows the passage of water from the network (14) to the conduit of the toilet cistern (15).

It is also possible to incorporate a timer (not depicted) in module B the purpose of which is to limit the operation time of the pump (11), such that if a predetermined time of demand for filtered water (13) is exceeded, it probably means that there is a failure in a component of the treated water line or a failure in the mechanisms of the toilet, so after the predetermined minutes, the normally closed three-way solenoid valve (12) changes its state, allowing the passage of water from the network (14), thereby preventing the waste of filtered water and electrical energy.

Having sufficiently described the nature of the present invention, as well as the ways in which it may be implemented, it is not considered necessary to elaborate on the explanation thereof in order for a person skilled in the art to understand the scope of the invention and the advantages derived therefrom.

## Claims

1. A water economiser for bathrooms which, applicable for the installation thereof connected between the sink basin drain and the toilet cistern, is **characterised by** comprising:
- one or more receptacles comprising at least two independent water accumulation tanks formed by:
- a first greywater accumulation tank (2) which receives, through a greywater inlet conduit (1), the used water from the sink basin drain, and
- a second treated water accumulation tank (6);
- one or several filter elements (5) installed in the first tank (2) and/or between the first tank (2) and the second tank (6), said tanks (2, 6) being arranged such that flows which allow water to pass from one to the other and through the mentioned filter elements (5) are generated;
- a pressure or drive pump (11) which, incorporated in a line of the treated water conduit (13) connected to the second tank (6), carries the treated water to a conduit line to the toilet cistern (15);
- a three-way solenoid valve (12) connected between the line of the treated water conduit (13), the conduit line to the cistern (15), and a conduit line to the supply network (14), such that it collects the water supplied by the drive pump (11) or from the line of the network (14) and delivers the water to the toilet cistern;
- at least one level sensor (8) associated with the treated water accumulation tank (6) and which, depending on the water level, activates or deactivates of the position of the solenoid valve (12); and
- an electrical control panel (10) for the control, safety, and automatisation of the electrical components of the economiser.

2. The water economiser for bathrooms according to claim 1, **characterised in that**, in one embodiment, the greywater accumulation tank (2) and the treated water accumulation tank (6) are incorporated in one and the same single module or block.

3. The water economiser for bathrooms according to claim 2, **characterised in that** the filter elements (5) are installed between the first tank (2) and the second tank (6), said tanks (2, 6) being arranged such that flows which allow water to pass from one to the other and through the mentioned filter elements (5) are generated in a system of communicating vessels.

4. The water economiser for bathrooms according to any of the preceding claims, **characterised in that** the greywater accumulation tank (2) comprises therein separation means (16) for separating solids by decantation.

5. The water economiser for bathrooms according to claim 1, **characterised in that**, in another embodiment, the greywater accumulation tank (2) and the treated water accumulation tank (6) are incorporated in respective independent modules (A, B), with a first module (A) with the first tank (2) being envisaged to be installed under the sink basin, between the sink basin drain (1.3) and the general drain (1.4) provided in the sink, and a second module (B) with the second tank (6) being envisaged to be installed in a different place, connected to the conduit line to the toilet cistern (15), both tanks (2, 6) being connected to one another by means of an intermediate conduit.

6. The water economiser for bathrooms according to claim 5, **characterised in that** the first module (A) comprises:
- a main segment of the greywater inlet conduit (1), with a configuration defining two decantation spaces or siphons (1.1 and 1.2), which is connected to the sink basin drain (1.3) and to the general drain (1.4), having two emptying points (1.5, 1.6); and
- a greywater accumulation tank (2), which internally contains a filter element (5) for separating solids from water and has an inlet opening (2.1) for the entry of water from the greywater inlet conduit (1) and an outlet opening (2.2) for the exit of filtered water to the intermediate conduit connecting with the tank (6) of the module (B), as well as with anchoring means for securing to said main segment of the greywater inlet conduit (1).

7. The water economiser for bathrooms according to claim 6, **characterised in that** the greywater accumulation tank (2) is secured to the main segment of the greywater inlet conduit (1) by means of readily detachable anchors that allow the replacement thereof.

8. The water economiser for bathrooms according to any of claims 5 to 7, **characterised in that** the second module (B) comprises:
- a treated water accumulation tank (6), provided with an inlet opening (6.1) communicating with the intermediate conduit connecting with the outlet opening (2.2) of the tank (2) of the first module (A);
- a drive pump (11) for transferring water accumulated in the tank (6) to the conduit of the toilet (15);
- a pressure switch (18) arranged in the filtered water feed segment (13), upstream of the drive pump (11);
- a three-way solenoid valve (12) that allows either passage through the filtered water conduit (13) or through the water conduit of the network (14) to the conduit of the toilet (15);
- chemical or microbiological treatment elements (7);
- at least one level sensor (8) in the tank (6);
- an electrical control panel (10).

9. The water economiser for bathrooms according to claim 8, **characterised in that** the second module (B) comprises, as chemical or microbiological treatment elements (7), an ultraviolet lamp which is encased in a receptacle arranged to that end through which water passes and is arranged in the conduit to the toilet (15) upstream of the three-way solenoid valve (12).

10. The water economiser for bathrooms according to any of the preceding claims, **characterised in that** it comprises a lower level sensor (8) arranged in the lower part of the treated water accumulation tank (6) and an upper level sensor (8') arranged in the upper part of the treated water accumulation tank (6).

11. The water economiser for bathrooms according to any of the preceding claims, **characterised in that** it comprises an air vent (17) in the upper part of the treated water accumulation tank (6).

12. The water economiser for bathrooms according to any of the preceding claims, **characterised in that** it comprises a safety check valve (19) arranged in the filtered water conduit (13) downstream of the three-way solenoid valve (12) and upstream of the pump (11).

13. The water economiser for bathrooms according to any of the preceding claims, **characterised in that** it comprises a notification device, associated with the electrical control panel (10), connected such that it provides notification when the economiser is operating through the line of the filtered water conduit (13).

14. The water economiser for bathrooms according to any of the preceding claims, **characterised in that** it comprises a timer for limiting the operation time of the drive pump (11).

15. The water economiser for bathrooms according to claim 14, **characterised in that** it comprises a notification device, associated with the electrical control panel (10), connected such that it provides notification when the economiser when the line of the filtered water conduit (13) does not reach the desired pressure within a set time predetermined by the timer.

16. The water economiser for bathrooms according to any of the preceding claims, **characterised in that** the treated water accumulation tank (6) comprises at least one emptying point (9) in the lower part for performing maintenance works or for performing auxiliary accumulation tank expansion.

17. The water economiser for bathrooms according to claim 16, **characterised in that** the treated water accumulation tank (6) comprises two openings made as a lower emptying point (9) and an upper emptying point (9') to enable coupling one or several accumulation tanks and expanding the capacity for accumulated water coming from the tank (2) and/or performing maintenance tasks.

18. The water economiser for bathrooms according to any of the preceding claims, **characterised in that** the drive pump (11) comprises an electronic pressure switch that ensures continuous pressure.

19. The water economiser for bathrooms according to any of the preceding claims, **characterised in that** the level sensor or sensors (8, 8') of the treated water accumulation tank (6) is an electromagnetic sensor.

20. The water economiser for bathrooms according to any of the preceding claims, **characterised in that** the filter elements (5) comprise a filter or filters capable of separating larger particles in the greywater and are of the "self-cleaning" type.

21. The water economiser for bathrooms according to any of claims 1 to 5, **characterised in that** it comprises, as a chemical or microbiological treatment element (7), an element based on a chlorinated or antibacterial material.

22. The water economiser for bathrooms according to claim 21, **characterised in that** the chemical or microbiological treatment element (7) is incorporated inside the treated water accumulation tank (6).

23. The water economiser for bathrooms according to any of the preceding claims, **characterised in that** the greywater accumulation tank (2) comprises at least one waste emptying point (3) in its lower part to enable periodically dumping accumulated waste out of the tank or to perform auxiliary waste accumulation tank expansion.

24. The water economiser for bathrooms according to any of the preceding claims, **characterised in that** the greywater accumulation tank (2) comprises a safety outlet point (4) in its upper part, acting as an overflow to allow discharging greywater in the case of collapse.
